# EUROPEAN PATENT SPECIFICATION

(11) **EP 1 580 587 B1**
(45) Date of publication and mention of the grant of the patent: **15.07.2009**
(21) Application number: 04007153.2
(22) Date of filing: 25.03.2004
(51) Int. Cl.: G02B 27/01, B64D 10/00, A42B 3/04, H01R 13/62

(54) **Helmet mounted display system with support unit**
Helmmontiertes Anzeigesystem und Unterstüzungseinheit
Système d'affichage monté sur un casque et son unité de support

(43) Date of publication of application: 28.09.2005
(73) Proprietor: SAAB AB, 581 88 Linköping (SE)
(72) Inventor: Blomqvist, Tommy, 582 16 Linköping (SE); Karlsson, Jimmie, 537 71 Linköping (SE); Stenberg, Krister, 582 32 Linköping (SE); Svenmar, David, 589 41 Linköping (SE); Larsson, Jörgen, 589 35 Linköping (SE)
(74) Representative: Holmberg, Magnus

(56) References cited:
- GB-A- 830 569
- US-A- 5 266 930
- US-A- 5 596 491
- US-B1- 6 195 206

## Description

### FIELD OF THE INVENTION

The present invention relates to a display system in a fighter aircraft including a helmet mounted display device and a helmet support unit.

### BACKGROUND OF THE INVENTION

A display system including a helmet mounted display device is more and more considered as a required system in a modem fighter aircraft. This type of system improves situation awareness for the pilot by presenting information on the visor of the helmet.

A display system according to the state-of the art includes a helmet mounted display device and a helmet support unit. The helmet mounted display device may be based on the technique with cathode ray tubes. The helmet support unit includes equipment supporting the functionality in the helmet mounted display device. Such equipment may include a high-voltage power supply for the CRT display, a graphic generator, a memory card and a connector for interfacing the display system with e.g. a system computer in the aircraft. Part of the support equipment may be specifically adapted to a specific display device, e.g., the high-voltage power supply may be tuned to the CRT in the helmet mounted display device.

The helmet mounted display device and the helmet support unit are interconnected by means of a high voltage connection when the display system is in operation. The display system also includes a connection to the aircraft. Disconnection of the high voltage connection during operation is undesirable since disconnection may lead to an arc being drawn during the disconnection process. High voltage connectors are also undesirable since they are more complex with increased maintenance. To increase safety and active-duty fitness it is therefore desirable that disconnection takes place in a low voltage cable during emergency situations as well as during normal use.

US, 5 596 491 discloses a helmet mounted display system. A first module including a high voltage power supply is mounted on the helmet. A second module including support equipment is connected to the first module by means of a low voltage connection. The disclosed system achieves a safe connection between the pilot and the high-voltage power
US-A-6195206 shows a helmet mounted display with external power supply on either the aircraft or on the pilot. required for the CRT display device. However, a draw-back with the disclosed system is that it provides increased head worn mass and increased size, which is considered to be a hazard in particular during ejection from the aircraft and also a risk for fatigue injuries due to long use.

The object of the invention is to achieve a display system where the pilot's head worn mass is reduced whilst assuring correct association between a helmet support unit and a helmet mounted display device. Another object of the invention is to provide a display system with a helmet mounted display device having a high voltage supply which can be carried safely by a person in the case that the connection to the aircraft should be broken.

### DESCRIPTION OF THE INVENTION

These objects are achieved through the display system disclosed in claim 1. In accordance with the invention a helmet support unit includes a high voltage power supply. The helmet support unit is arranged in a holder on the garment of the pilot.

In accordance with the invention the helmet support unit and the helmet mounted display device are integrated by means of a flexible extension. The helmet support unit further includes a quick release connector for detachably connecting the helmet support unit to a connector on a connection cable for connection with the aircraft.

In accordance with the invention, the quick release connector is arranged to be released from the aircraft connector when subjected to a pulling force exceeding a first predetermined level.

In accordance with the invention, an emergency coupling is arranged in the flexible extension which integrates the helmet mounted display device and the helmet support unit. The emergency coupling is arranged to be disconnected at a pulling force exceeding the first predetermined level at least by a factor two.

In accordance with an embodiment of the invention the helmet support unit includes a high-voltage power converter, a graphic editor and a memory card.

In accordance with a preferred embodiment of the invention the helmet support unit is arranged in a holder on the garment of the pilot. Such a holder may e.g. be a front pocket on the pilot's garment, the pocket being placed on the torso. It may also be any type of clip attached to the garment.

In another embodiment of the invention the helmet support unit includes cooling means in a back portion of the unit, which portion interfaces with the pilot.

In yet another embodiment of the invention, the helmet support unit includes isolation means in the back portion of the unit where the unit interfaces with the pilot.

The display system according to the invention has the advantage that it reduces the weight in the helmet without introducing the risk of having a separation in the high voltage connection to at least one CRT in the helmet mounted display device.

A further advantage of the invention is that separation of the display system from the aircraft may be achieved through separation in a quick release connector alone; no further separations are required during e.g. ejection from the aircraft. The display system is well adapted for a situation when a quick exit from the aircraft must be performed.

Another advantage of the invention is that there are no free-hanging cables or load after separation of the display system from the aircraft.

Yet another advantage is that the risk of foreign object damage is kept on a low level, since a major part of the equipment in the display system may be removed from the aircraft when not in use. This is also preferable from a weight limitation aspect.

A further advantage of the invention is that the display system easily may be retrofitted into an existing aircraft configuration. The system is particularly suitable for cockpits with limited space.

### BRIEF DESCRIPTION OF THE DRAWINGS

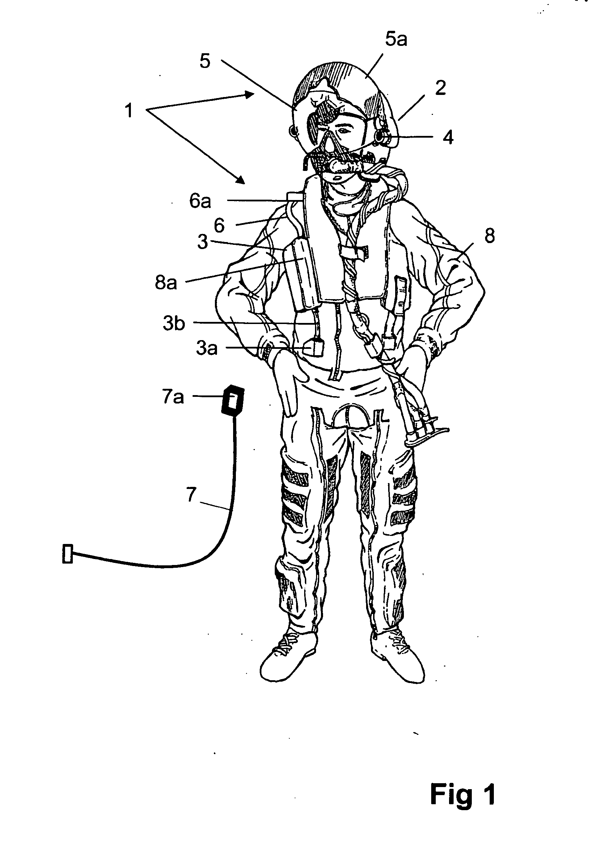

Fig 1. discloses a pilot with a display system in accordance with the invention

### DETAILED DESCRIPTION OF PREFERRED EMBODIMENTS

The present invention will be described in relation to the embodiment illustrated in Figure 1, wherein a display system 1 including a helmet mounted display device 2 and a helmet support unit 3 is illustrated. The helmet mounted display device 2 includes at least one cathode ray tube (CRT) 4 which projects an image onto a visor 5a of a helmet 5. The CRT requires a high voltage supply which must be provided without impairing the safety in the cockpit.

The helmet mounted display device 2 is supported by equipment arranged in the helmet support unit 3. In order to maintain the weight of the helmet 5 mounted parts of the display system 1 on a lowest possible level, all equipment that is not required for the generation of the image is removed from the helmet 5 and arranged in the helmet support unit 3. This equipment includes a high voltage signal source, a graphic generator, a memory card and a quick release connector 3a. The helmet support unit 3 and the helmet mounted display device 2 are interconnected by means of a flexible extension 6. This flexible extension 6 may be achieved through any type of flexible cable or other type of connection that is attached to the helmet mounted display device 2 and to the helmet support unit 3 in such a way that it resists the pulling forces that may occur during separation of the pilot from the aircraft. From a configuration point of view, the helmet mounted display device 2 and the helmet support unit 3 are configured as one entity, even though the flexible extension 6 between the helmet mounted display device 2 and the helmet support unit 3 enables physical adjustment of the helmet support unit 3 in relation to the helmet mounted display device 2.

The high voltage power unit, graphic generator and memory card may be uniquely adapted to a specific helmet mounted display device 2. This applies in particular to the relationship between a specific high voltage power unit and the image generator in the form of at least one CRT. In order not to deviate from required settings, a specific helmet support unit 3 should therefore always be associated with the same helmet mounted display device 2. With the configuration disclosed in Figure 1, disconnection between the helmet support unit 3 from the helmet mounted display device 2 is only considered as an measure in an emergency situation, e.g., when during activation of the ejection seat, the helmet and the pilot are separated. An emergency coupling 6a in the flexible extension between the helmet mounted display device 2 and the helmet support unit 3 is arranged to be released when subjected to a high pulling force.

The helmet support unit also includes a man-portion quick release connector 3a, which connects the unit to a corresponding aircraft quick release connector 7a on a connection cable 7 for connection with the aircraft and provides for quick release functionality during e.g. ejection from the aircraft. The quick release connector 3a also provides the means for normal connection and disconnection of the display system in the aircraft. The man-portion quick release connector 3a is associated with the helmet support unit 3 by means of an extension 3b.

The helmet support unit 3 is attached to the garment 8 of the pilot in a holder 8a specifically adapted for this purpose. In the embodiment disclosed in figure 1, the holder 8a is a pocket in the garment of the pilot. The holder may also be a clip, given that the clip may sustain the forces occurring at an ejection from the aircraft. The helmet support unit 3 is preferably attached in such a location on the garment, that the pilot may easily install the unit on the body by himself.

The high-voltage power source present in the helmet support unit 3 generates a substantial amount of heat while converting the low-voltage power of the aircraft to the high-voltage power required by the CRT. The portion of the helmet support unit that rests against the garment 8 of the pilot may include means for cooling or isolating the unit. Tests have been made with distance elements or flanges, which provide an air gap between the unit and the pilot. Other means of isolation or cooling are of course also possible within the scope of the invention. If the garment 8 of the pilot includes the possibility of injecting air into the garment for counteracting G-forces, this functionality may also be used to create an isolating air gap between the helmet support unit and the pilot.

The display system is interconnected with the aircraft by means of a connection cable 7. In the aircraft, an aircraft quick release connector 7a is arranged to interface with the man-portion quick release connector 3a. The connection cable 7 is attached to the bulkhead by means of any suitable type of connector. However, it is preferable that the connection to the bulkhead is such that the separation resistance in this connection is higher than that in the assembled quick release connector 3a, 7a in order to avoid separation in the bulkhead during an ejection maneuver. Separation of the connection cable 7 from the bulkhead would lead to free-hanging cables after ejection, which is considered undesired from a safety point of view. The man-portion quick release connector 3a and the aircraft quick release connector 7a may be arranged as a plug/socket connector held in place by friction. The two connectors 3a, 7a may also include any other type of mechanical means to join the two connectors 3a, 7a when the display system is installed in the aircraft, provided that such mechanical means allows easy separation of the two connectors 3a, 7a.

## Claims

1. A display system (1) in a fighter aircraft including a helmet mounted display device (2) and a helmet support unit (3), wherein the helmet mounted display device (2) is arranged to provide information on a visor (5a) of a helmet (5) and the helmet support unit (3) is arranged to interconnect the display system with a system computer and a power source in the aircraft, **characterized in that** the helmet support unit (3) includes a high voltage power supply and is arranged in a holder (8a) on the garment (8) of the pilot, that the helmet support unit (3) and the helmet mounted display device (2) are integrated by means of a flexible extension (6), that the helmet support unit (3) includes a quick release connector (3a) for detachably connecting the helmet support unit (3) to a connector (7a) on a connection cable (7) for connection with the aircraft, that the quick release connector (3a) is arranged to be released from the connector (7a) on the connection cable (7) when subjected to a pulling force exceeding a first predetermined level and that the flexible extension (6) includes an emergency coupling (6a) arranged to be disconnected at a pulling force exceeding the first predetermined level at least by a factor two.

2. A display system (1) in accordance with claim 1, wherein the helmet support unit (3) includes a high-voltage power converter, a graphic editor, a memory card.

3. A display system (1) in accordance with any of the preceding claims, wherein the holder (8a) is a front pocket on the torso of the pilot.

4. A display system (1) in accordance with claim 1 or 2, wherein the holder is a clip attached to the garment (8) of the pilot.

5. A display system (1) in accordance with any of the preceding claims, wherein the helmet support unit (3) includes cooling means in a back portion of the unit, which portion interfaces with the pilot.

6. A display system (1) in accordance with claims 1-4, wherein the helmet support unit (3) includes isolation means in a back portion of the unit, which portion interfaces with the pilot.

## Patentansprüche

1. Anzeigesystem (1) in einem Kampfflugzeug einschließlich eines Helm-montierten Anzeigegerätes (2) und einer Helmunterstützungseinheit (3), wobei das Helm-montierte Anzeigegerät (2) angeordnet ist, Information auf einem Schirm (5a) eines Helmes (5) bereitzustellen und die Helmunterstützungseinheit (3) angeordnet ist, das Anzeigesystem mit einem Systemcomputer und einer Leistungsquelle in dem Flugzeug zu verbinden, **dadurch gekennzeichnet, dass** die Helmunterstützungseinheit (3) eine Hochspannungsleistungsversorgung einschließt und in einem Halter (8a) auf der Bekleidung (8) des Piloten angeordnet ist, dass die Helmunterstützungseinheit (3) und das Helm-montierte Anzeigegerät (2) mittels einer flexiblen Erweiterung (6) integriert sind, dass die Helmunterstützungseinheit (3) einen Schnellfreigabeverbinder (3a) zum entfernbaren verbinden der Helmunterstützungseinheit (3) mit einem Verbinder (7a) an dem Verbindungskabel (7) zur Verbindung mit dem Flugzeug einschließt, dass der Schnellfreigabeverbinder (3a) angeordnet ist, von dem Verbinder (7a) an dem Verbindungskabel (7) freigeben zu werden, wenn dieser einer Zugkraft unterzogen wird, die einen ersten vorbestimmten Pegel überschreitet und dass die flexible Erweiterung (6) eine Energiekopplung (6a) einschließt, die angeordnet ist, bei einer Zugkraft getrennt zu werden, die den ersten vorbestimmten Pegel zumindest um den Faktor zwei überschreitet.

2. Anzeigesystem (1) nach Anspruch 1, wobei die Helmunterstützungseinheit (3) einen Hochspannungsleistungswandler, einen Grafikeditor, eine Speicherkarte einschließt.

3. Anzeigesystem (1) nach einem der vorangehenden Ansprüche, wobei der Halter (8a) eine Vordertasche auf dem Körper des Piloten ist.

4. Anzeigesystem (1) nach Anspruch 1 oder 2, wobei der Halter eine Klammer ist, die an der Bekleidung (8) des Piloten befestigt ist.

5. Anzeigesystem (1) nach einem der vorangehenden Ansprüche, wobei die Helmunterstützungseinheit (3) eine Kühlvorrichtung in einem Rückteil der Einheit einschließt, der eine Schnittstele mit dem Piloten bildet.

6. Anzeigesystem (1) nach einem der Ansprüche 1-4, wobei die Helmunterstützungseinheit (3) eine Isolationsvorrichtung in einem Rückteil der Einheit, der eine Schnittstele mit dem Piloten bildet.

## Revendications

1. Système d'affichage (1) dans un avion de combat comprenant un dispositif d'affichage monté sur casque (2) et une unité de support de casque (3), dans lequel le dispositif d'affichage monté sur casque (2) est agencé pour fournir des informations sur une visière (5a) d'un casque (5) et l'unité de support de casque (3) est agencée pour interconnecter le système d'affichage avec un ordinateur de système et une source d'alimentation électrique dans l'avion, **caractérisé en ce que** l'unité de support de casque (3) comprend une alimentation électrique de haute tension et est agencée dans un dispositif de maintien (8a) sur la combinaison (8) du pilote, **en ce que** l'unité de support de casque (3) et le dispositif d'affichage monté sur casque (2) sont intégrés au moyen d'une extension flexible (6), **en ce que** l'unité de support de casque (3) comprend un connecteur de libération rapide (3a) pour connecter de manière détachable l'unité de support de casque (3) à un connecteur (7a) sur un câble de connexion (7) pour la connexion avec l'avion, **en ce que** le connecteur de libération rapide (3a) est agencé pour être libéré du connecteur (7a) sur le câble de connexion (7) lorsqu'il est soumis à une force de tirage dépassant un premier niveau prédéterminé et **en ce que** l'extension flexible (6) comprend un couplage d'urgence (6a) agencé pour être déconnecté à une force de tirage dépassant le premier niveau prédéterminé au moins d'un facteur de deux.

2. Système d'affichage (1) selon la revendication 1, dans lequel l'unité de support de casque (3) comprend un convertisseur électrique de haute tension, un éditeur graphique et une carte de mémoire.

3. Système d'affichage (1) selon l'une quelconque des revendications précédentes, dans lequel le dispositif de maintien (8a) est une poche frontale sur le torse du pilote.

4. Système d'affichage (1) selon la revendication 1 ou 2, dans lequel le dispositif de maintien est une pince attachée à la combinaison (8) du pilote.

5. Système d'affichage (1) selon l'une quelconque des revendications précédentes, dans lequel l'unité de support de casque (3) comprend des moyens de refroidissement dans une partie arrière de l'unité, laquelle partie est en interface avec le pilote.

6. Système d'affichage (1) selon l'une quelconque des revendications 1 à 4, dans lequel l'unité de support de casque (3) comprend des moyens d'isolation dans une partie arrière de l'unité, laquelle partie est en interface avec le pilote.
